Europäisches Patentamt

European Patent Office

Office européen des brevets

(11) Veröffentlichungsnummer: **0 292 812**
**A2**

(12) **EUROPÄISCHE PATENTANMELDUNG**

(21) Anmeldenummer: 88107727.5

(22) Anmeldetag: 13.05.88

(51) Int. Cl.⁴: **F16L 27/10**

(30) Priorität: 26.05.87 DE 3717699

(43) Veröffentlichungstag der Anmeldung:
30.11.88 Patentblatt 88/48

(84) Benannte Vertragsstaaten:
AT BE CH DE ES FR GB GR IT LI LU NL SE

(71) Anmelder: **Krumscheid, Günter**
**Halinger Dorfstrasse 83**
**D-5750 Menden 1(DE)**

(72) Erfinder: **Krumscheid, Günter**
**Halinger Dorfstrasse 83**
**D-5750 Menden 1(DE)**

(74) Vertreter: **Patentanwaltsbüro Cohausz &**
**Florack**
**Postfach 14 01 47**
**D-4000 Düsseldorf 1(DE)**

(54) **Flexible Verbindungsmanschette für Rohre.**

(57) Die Erfindung bezieht sich auf eine flexible Verbindungsmanschette für Rohre. An der Stoßstelle der beiden Rohre 1,2 sitzt auf den beiden Rohren 1,2 eine als Zugfeder ausgebildete Schraubenfeder 3 mit aneinanderliegenden Windungen. Diese Schraubenfeder 3 ist eingebettet in einer äußeren Dichtungshülse 4, die mit innerseitigen Dichtungskragen 5,6 unmittelbar außen auf den Rohrenden 1,2 aufliegt. Die unmittelbar auf den Rohrenden 1,2 aufliegende Schraubenfeder ermöglicht ein schnelles dichtes Verbinden der Rohre ohne Schraubverbindungen und Schellen. Die Schraubenfeder schützt das elastische Material der Dichtungshülse vor der unmittelbaren Einwirkung großer Wärme des zu leitenden Mediums.

EP 0 292 812 A2

## Flexible Verbindungsmanschette für Rohre

Die Erfindung bezieht sich auf eine flexible Verbindungsmanschette für Rohre, bestehend aus einer elastischen Dichtungshülse und einer dazu konzentrisch angeordneten, als Zugfeder ausgebildeten und aneinanderliegende Windungen aufweisenden Schraubenfeder, deren lichter Durchmesser bei gegenseitigem Verdrehen der in der Manschette sitzenden Rohrenden sich in Abhängigkeit von der Drehrichtung weitet oder zusammenzieht.

Eine solche Verbindungsmanschette ist dazu bestimmt, ohne Gewindemuffen und ohne Verwendung von Dichtungsmittel bzw. ohne Schellen Rohre schnell und gasdicht verbinden, aber auch - schnell lösen zu können.

Bei einer bekannten Verbindungsmanschette dieser Art (DE-PS 806 817) liegt die Dichtungshülse auch an der Stoßstelle der beiden Rohrenden unmittelbar auf dem Rohr auf. Diese Dichtungshülse ist von einer oder mehreren Federwicklungen umgeben, die ihrerseits von in der Mitte quergeteilten Rohrhülsen umgeben sind, deren Halbteile sich gegenläufig verdrehen lassen, so daß auf die Dichtungshülse eine große radiale Pressung ausgeübt werden kann. Durch eine die Hülsen umgebende Schraubenfeder mit aneinanderliegenden Windungen werden die Hülsen in ihrer verdrehten Stellung blockiert.

Der Aufbau einer solchen Verbindungsmanschette ist wegen der vielen Einzelteile kompliziert. Auch ist die innere Dichtungshülse nicht vor der unmittelbaren Einwirkung des durch die Rohre zu leitenden Fluidums geschützt. Bei einem heißen Fluidum, wie zum Beispiel Verbrennungsgase einer Brennkraftmaschine, bedarf es eines besonderen hitzebeständigen Materials, damit die Dichtungshülse nicht durch die heißen Gase beschädigt wird. Wegen des mehrschichtigen Aufbaus ist die Verbindungsmanschette auch verhältnismäßig voluminös.

Aufgabe der Erfindung ist es, eine im Aufbau einfache, klein bauende Verbindungsmanschette zu schaffen, die zur Leitung heißer Gase geeignet ist.

Diese Aufgabe wird erfindungsgemäß bei einer Verbindungsmanschette der eingangs genannten Art dadurch gelöst, daß die Schraubenfeder im mittleren Axialbereich der Dichtungshülse freiliegend an deren Innenseite angeordnet ist und die überstehenden Enden der Dichtungshülse Dichtungskragen aufweisen, die im wesentlichen den gleichen lichten Durchmesser wie die Schraubenfeder haben.

Die erfindungsgemäße Verbindungsmanschette ist einfach im Aufbau, da sie nur aus den beiden Teilen der Schraubenfeder und der Dichtungshülse besteht. Da die Schraubenfeder unmittelbar auf den Rohrenden aufliegt, lassen sich die Rohrenden mit einer Schraubbewegung unter Aufweiten der Schraubenfeder sowohl leicht zusammenstecken als auch lösen. Ohne Schraubbewegung ist ein Lösen nicht möglich, weil bei reiner Zugbewegung sich der freie Durchmesser der Schraubenfeder verringert und damit die Schraubenfeder auf den Rohrenden festklemmt. Die unmittelbare Auflage der Schraubenfeder auf den Rohrenden hat den weiteren Effekt, daß sie die außen auf ihr angeordnete Dichtungshülse vor der unmittelbaren Einwirkung des zu leitenden Mediums abschirmt. Bei einem heißen Medium wird die Wärme in die Rohrenden abgeleitet, so daß es nicht zu einem Hitzestau und damit zu einer Überhitzung der Dichtungshülse kommen kann. Die Dichtfunktion üben die unmittelbar auf den Rohrenden aufliegenden Dichtungskragen aus. Da für das Festklemmen keine Schellen oder dergl. benötigt werden und die Manschette nur aus zwei Teilen besteht, läßt sie sich auch dort unterbringen, wo nur wenig Freiraum zur Verfügung steht.

Nach einer Ausgestaltung der Erfindung sind Dichtungshülse und Dichtungskragen einstückig ausgebildet. In diesem Fall liegt die Schraubenfeder in einer innerseitigen, in axialer Richtung breiten Nut.

Im folgenden wird die Erfindung anhand einer ein Ausführungsbeispiel darstellenden Zeichnung näher erläutert.

Die Verbindungsmanschette für die Enden 1,2 von Rohren besteht aus einer unmittelbar auf den Rohrenden 1,2 aufliegenden Schraubenfeder 3 und einer Dichtungshülse 4.

Die Schraubenfeder 3 ist als Zugfeder ausgebildet. Ihre Windungen liegen dicht aneinander. Die Schraubenfeder 3 erstreckt sich über die Stoßstelle der beiden Rohrenden 1,2.

Die Dichtungshülse 4 weist an ihren Enden zwei Dichtungskragen 5,6 auf, die unmittelbar an den Rohrenden 1,2 anliegen. Zwischen diesen beiden Dichtungskragen 5,6 liegt die Schraubenfeder 3 in einer innerseitigen Nut bzw. ist bei der Herstellung der Dichtungshülse 4 eingespritzt.

Sowohl die Schraubenfeder 3 als auch die Dichtungskragen 5,6 haben gegenüber den Rohrenden 1,2 ein geringes Untermaß, damit bei eingesetzten Rohrenden 1,2 sich eine Klemmwirkung durch die Schraubenfeder 3 und eine Dichtungswirkung durch die Dichtungskragen 5,6 ergibt. Da im Bereich der Stoßstelle der beiden Rohrenden 1,2 das Material der Dichtungshülse 4 nicht freiliegt, sondern durch die dicht aneinanderliegenden Windungen der wärmeleitend mit den Rohrenden 1,2 verbundenen Schraubenfeder 3 abgeschirmt ist, ist das Material der insbesondere gegen hohe Hitzeeinwirkung gefährdeten Dichtungshülse 4 geschützt. Wegen der Ausnutzung sowohl der Klemm- als auch Schirmwirkung der Schraubenfeder 3 ist die Voraussetzung für einen einfachen Aufbau geschaffen. Die gasdichte Abdichtung kann deshalb in den Bereich der wärmeableitenden Rohrenden 1,2 gelegt werden.

Neben diesen Vorteilen zeichnet sich die erfindungsgemäße Verbindungsmanschette vor allem dadurch aus, daß die Manschette nicht nur einfach im Aufbau ist, sondern auch kompakt baut, weil keine Schellen oder sonstigen Teile zur Befestigung und Abdichtung nötig sind.

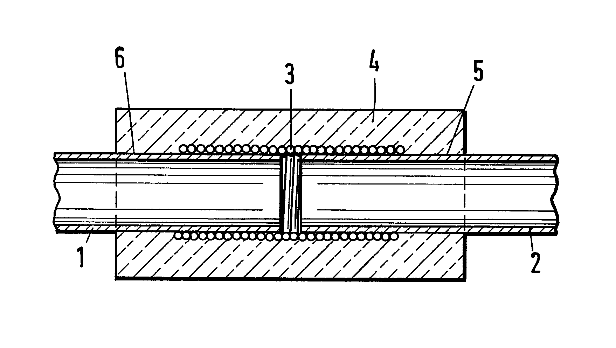

## Ansprüche

1. Flexible Verbindungsmanschette für Rohre, bestehend aus einer elastischen Dichtungshülse und einer dazu konzentrisch angeordneten, als Zugfeder ausgebildeten und aneinanderliegende Windungen aufweisenden Schraubenfeder, deren lichter Durchmesser bei gegenseitigem Verdrehen der in der Manschette sitzenden Rohrenden sich in Abhängigkeit von der Drehrichtung weitet oder zusammenzieht,
**dadurch gekennzeichnet,** daß die Schraubenfeder (3) im mittleren Axialbereich der Dichtungshülse (4) freiliegend an deren Innenseite angeordnet ist und die überstehenden Enden der Dichtungshülse (4) Dichtungskragen (5,6) aufweisen, die im wesentlichen den gleichen lichten Durchmesser wie die Schraubenfeder (3) haben.

2. Verbindungsmanschette nach Anspruch 1, **dadurch gekennzeichnet,** daß die Dichtungshülse (4) und die Dichtungskragen (5,6) einstückig ausgebildet sind.